# EUROPEAN PATENT APPLICATION

(11) **EP 4 501 803 A1**
(43) Date of publication of application: **05.02.2025**
(21) Application number: 23781000.7
(22) Date of filing: 30.03.2023
(51) Int. Cl.: B65D 5/06, B65D 5/74

(54) **PAPER CONTAINER**

(30) Priority: 30.03.2022 JP 2022057591
(71) Applicant: Nippon Paper Industries Co., Ltd., Tokyo 114-0002 (JP)
(72) Inventor: MI, Haoran, Tokyo 114-0002 (JP); OKUBO, Katsuyuki, Tokyo 114-0002 (JP); ISHII, Masayasu, Tokyo 114-0002 (JP); MIURA, Ryo, Tokyo 114-0002 (JP)
(74) Representative: Murgitroyd & Company
(86) International application number: PCT/JP2023/013398
(87) International publication number: WO 2023/190992

(57) **Abstract**

In a gable roof-type paper container (1), on an unsealed-side body panel (8), which is contiguous with an unsealed-side gable wall forming panel (24) through a top portion horizontal folding line (26), a first auxiliary folding line (44) having a downwardly curved shape is formed to have: a left/right end portion (42, 43) arranged at or near an intersection (40, 41) of an end portion of a body vertical folding line (4, 5) on the left/right of the body panel (8) and a left/right end portion of the top portion horizontal folding line (26); and a lowest point (U1) located at a center of the body panel (8) in a right-and-left direction thereof, and below the first auxiliary folding line (44) and at a predetermined distance from the first auxiliary folding line (44), a second auxiliary folding line (47) having a downwardly curved shape is formed to have: a left/right end portion (45, 46) arranged at or near the intersection (40, 41); and a lowest point (U2) located at the center of the body panel (8) in the right-and-left direction.

## Description

### Technical Field

The present invention relates to a paper container for storing a liquid content.

### Background Art

Hitherto, a gable roof-type paper container has been widely used as a paper container for storing a liquid content such as milk or juice. The gable roof-type paper container is formed of a paperboard material having a thermoplastic resin laminated on each of a front surface and a back surface thereof. The gable roof-type paper container includes four body panels. A vertical direction sealing panel joins edge portions of the body panels so that a quadrangular tubular body is formed. A pair of gable roof forming panels including outer-side top sealing panels at upper portions thereof and being opposed to each other are contiguous with upper ends of the body panels are contiguous with upper ends of the body panels, and a pair of gable wall forming panels including inner-side top sealing panels at upper portions thereof and any one of which being formed into a pouring spout to be unsealed are contiguous with upper ends of the body panels. The pair of gable wall forming panels are folded between the pair of gable roof forming panels, and the outer-side top sealing panels and the inner-side top sealing panels are heated, sealed, and tightly closed at predetermined positions, thereby forming a top portion of the paper container.

The gable roof-type paper container described above is unsealed as follows. Fingers are inserted into a space defined to have an opening between the pair of gable roof forming panels, the body panel, and the gable wall forming panel, and the fingers are put on the gable wall forming panel so as to expand the space laterally. In this manner, unsealed-side opposing surfaces between the outer-side top sealing panels and the inner-side top sealing panel, which are heated and sealed, are separated from each other. Then, the gable wall forming panel folded between the pair of gable roof forming panels is pulled, and the paper container is folded toward an outer side thereof along a top portion horizontal folding line at a boundary between the gable wall forming panel and the body panel that is contiguous with the gable wall forming panel through the top portion horizontal folding line, thereby forming the pouring spout. However, the space defined between the body panel and the gable wall forming panel is not wide, and hence the fingers are put on a small area of the gable wall forming panel so that it is difficult to unseal the paper container.

As a paper container for solving the above-mentioned problem, in recent years, there has been known the following gable roof-type paper container (see, for example, Patent Literature 1). Specifically, the paper container includes an auxiliary folding line formed in a vicinity of a top portion horizontal folding line located at a boundary between a gable wall forming panel, which is to be pulled at the time of unsealing of the paper container, and a body panel contiguous with the gable wall forming panel. The auxiliary folding line stretches from one end portion to another end portion of the top portion horizontal folding line so as to extend downward toward a center of the body panel.

With the gable roof-type paper container including the auxiliary folding line described above, when a top-portion corner portion of a body formed along the top portion horizontal folding line is pushed in toward an inner side of the container, the paper container is mountain-folded along the auxiliary folding line, and the top-portion corner portion is curved toward the inner side of the container so that an upper portion of the body panel located between the top portion horizontal folding line and an opening auxiliary line is dented toward the inner side of the container. Thus, a space into which fingers are to be inserted when the fingers are put on the gable wall forming panel at the time of unsealing is expanded, thereby being capable of easily unsealing the paper container.

### Citation List

### Patent Literature

[PTL 1] JP 2002-234524

### Summary of Invention

### Technical Problem

In recent years, a small-sized gable roof-type paper container has become popular as a paper container for storing drinkables for school lunches and other occasions, and as a portable and convenient paper container for storing drinkables for travel and other occasions. In the case of the small-sized gable roof-type paper container, the top portion horizontal folding line forming the top-portion corner portion of the body has a small length, and hence a relatively large force is required to push the top-portion corner portion in toward the inner side of the container in order to dent the upper portion of the body panel located between the top portion horizontal folding line and the opening auxiliary line. When the pushing-in force is small at the time of denting, the body panel is not easily dented, and when the pushing-in force is excessively large, the body panel is dented beyond the auxiliary folding line of the body panel. As a result, there is a problem in that the body may be distorted.

It is an object of the present invention to provide a paper container, which allows a body to be pushed in and dented with a relatively small force when a top-portion corner portion of the body is pushed in at the time of unsealing, and can prevent distortion of the body even if the body is pushed in with an excessively large force.

### Solution to Problem

In order to achieve the above-mentioned object, according to the invention described in claim 1, there is provided a paper container, which is a gable roof type and is formed of a paperboard material having a thermoplastic resin laminated on each of a front surface and a back surface of the paperboard material, the paper container comprising: four body panels; a vertical direction sealing panel, which joins edge portions of the four body panels so that the four body panels form a quadrangular body; a pair of gable roof forming panels, which are contiguous with upper ends of the body panels, and include outer-side top sealing panels at upper portions of the pair of gable roof forming panels, respectively, and are opposed to each other; a pair of gable wall forming panels, which are contiguous with upper ends of the body panels through top portion horizontal folding lines, and include inner-side top sealing panels at upper portions of the pair of gable wall forming panels, respectively, and are opposed to each other, any one of the pair of gable wall forming panels being formed into a pouring spout to be unsealed; and a top portion formed by folding the pair of gable wall forming panels between the pair of gable roof forming panels, and by heating, sealing, and tightly closing the outer-side top sealing panels and the inner-side top sealing panels at predetermined positions. On an unsealed-side body panel among the four body panels, which is contiguous with the unsealed-side gable wall forming panel through a top portion horizontal folding line, a first auxiliary folding line having a downwardly curved shape is formed to have: a left end portion arranged at or near an intersection of an end portion of a body vertical folding line on the left of the unsealed-side body panel and a left end portion of the top portion horizontal folding line; a right end portion arranged at or near an intersection of an end portion of a body vertical folding line on the right of the unsealed-side body panel and a right end portion of the top portion horizontal folding line; and a lowest point located at a center of the body panel in a right-and-left direction of the body panel, and below the first auxiliary folding line and at a predetermined distance from the first auxiliary folding line, a second auxiliary folding line having a downwardly curved shape is formed to have: a left end portion arranged at or near the intersection of the end portion of the body vertical folding line on the left of the body panel and the left end portion of the top portion horizontal folding line; a right end portion arranged at or near the intersection of the end portion of the body vertical folding line on the right of the body panel and the right end portion of the top portion horizontal folding line; and a lowest point located at the center of the body panel in the right-and-left direction.

According to the invention described in claim 1, at the time of unsealing, when the top-portion corner portion of the body formed at the upper end portion of the unsealed-side body panel is pushed in toward the inner side of the paper container, a force of pushing the top-portion corner portion of the body in toward the inner side of the paper container is applied to the first auxiliary folding line and the second auxiliary folding line formed on the body panel. Accordingly, the body panel is mountain-folded along the first auxiliary folding line and the second auxiliary folding line with a relatively small force, and thus the top-portion corner portion can be pushed in and dented with a relatively small force.

When the top-portion corner portion is pushed in with an excessively large force, the body panel is first mountain-folded and dented along the first auxiliary folding line and then mountain-folded and dented along the second auxiliary folding line, and thus the body panel is prevented from being dented beyond the second auxiliary folding line, thereby being capable of preventing distortion of the body.

According to the invention described in claim 2, in claim 1, a length of an interval between the lowest point of the first auxiliary folding line and the lowest point of the second auxiliary folding line is 30% to 50% of a length of an interval between a center of the top portion horizontal folding line and the lowest point of the first auxiliary folding line.

According to the invention described in claim 2, the length of the interval between the lowest point of the first auxiliary folding line and the lowest point of the second auxiliary folding line is 30% to 50% of the length of the interval between the center of the top portion horizontal folding line and the lowest point of the first auxiliary folding line. Accordingly, the body panel is mountain-folded along the first auxiliary folding line and the second auxiliary folding line with a smaller force, and thus the top-portion corner portion can be pushed in and dented with a smaller force.

When the top-portion corner portion is pushed in with an excessively large force, the body panel is first mountain-folded and dented along the first auxiliary folding line and then mountain-folded and dented along the second auxiliary folding line, and thus the body panel is prevented from being dented beyond the second auxiliary folding line, thereby being capable of preventing distortion of the body.

### Advantageous Effects of Invention

As described above, according to the paper container of the present invention, the body can be pushed in and dented with a relatively small force when the top-portion corner portion of the body is pushed in at the time of unsealing, and can prevent distortion of the body even if the body is pushed in with an excessively large force.

### Brief Description of Drawings

FIG. 1 is a side view for illustrating an unsealed side of an example of a paper container according to an embodiment of the present invention.
FIG. 2 is a plan view for illustrating a carton blank for the paper container illustrated in FIG. 1.
FIG. 3 is an explanatory enlarged view for illustrating a part of FIG. 2.
FIG. 4 is an explanatory view for illustrating another example of a first auxiliary folding line and a second auxiliary folding line of the paper container illustrated in FIG. 1.
FIG. 5 is an explanatory view for illustrating another example of the first auxiliary folding line and the second auxiliary folding line of the paper container illustrated in FIG. 1.

### Description of Embodiments

Now, a paper container according to an embodiment of the present invention is described in detail with reference to the drawings.

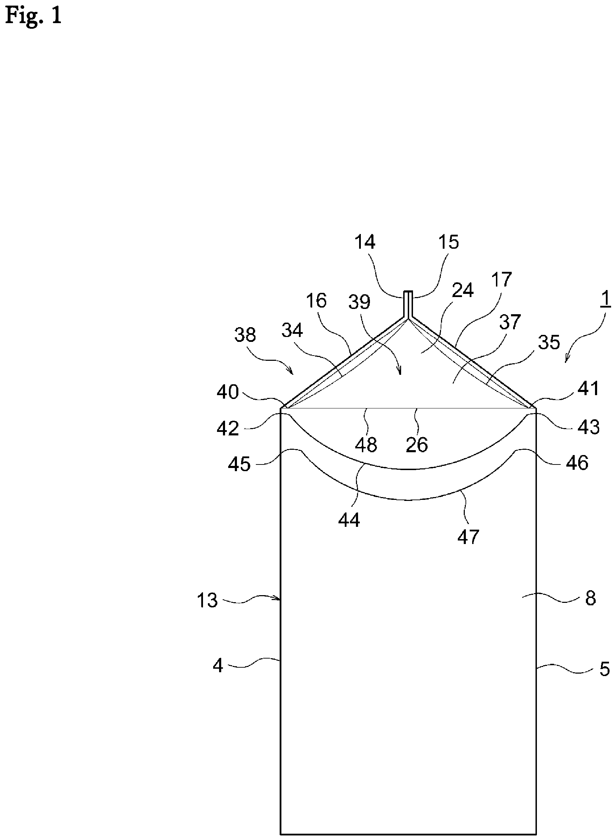

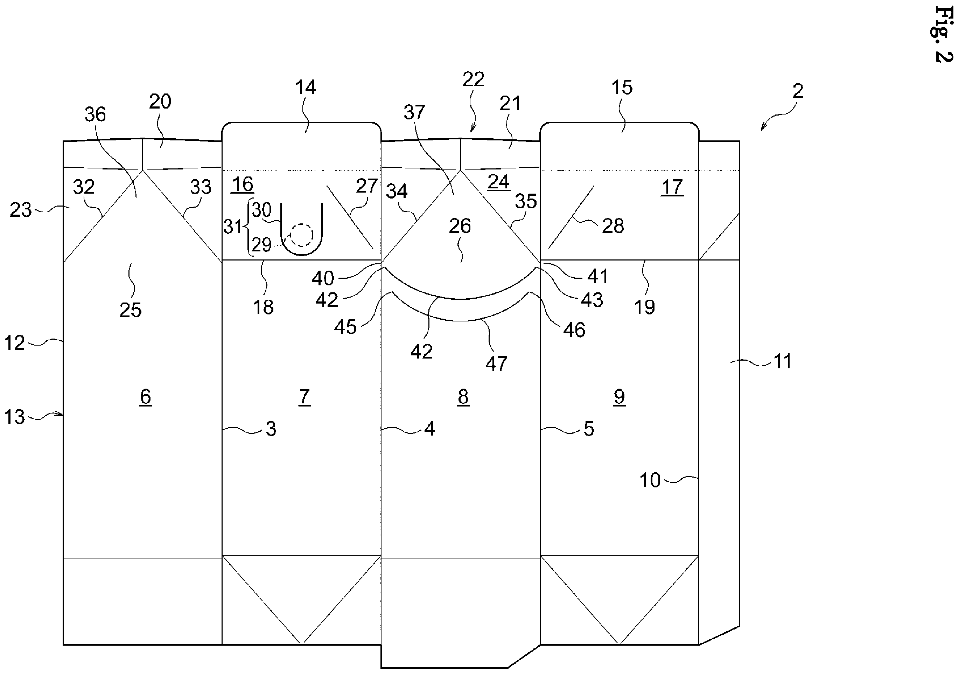

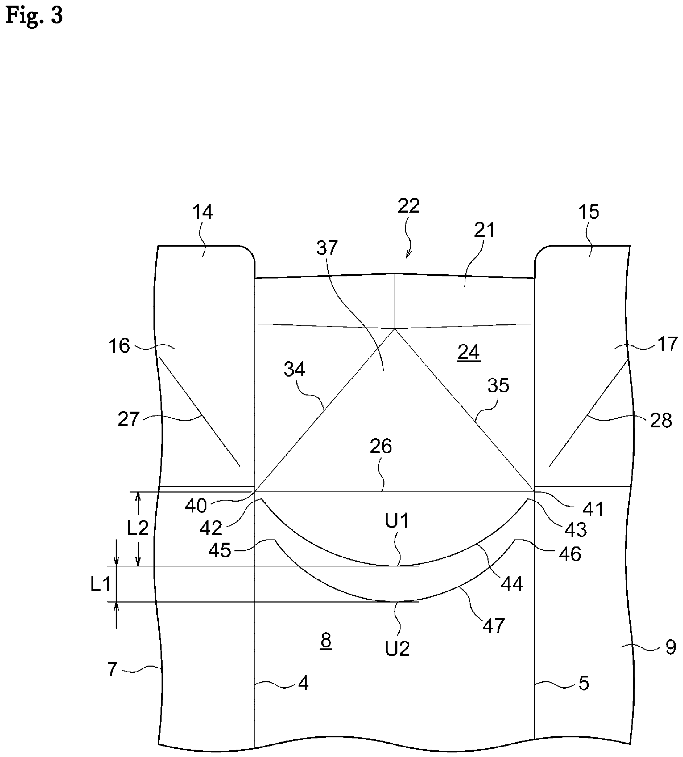

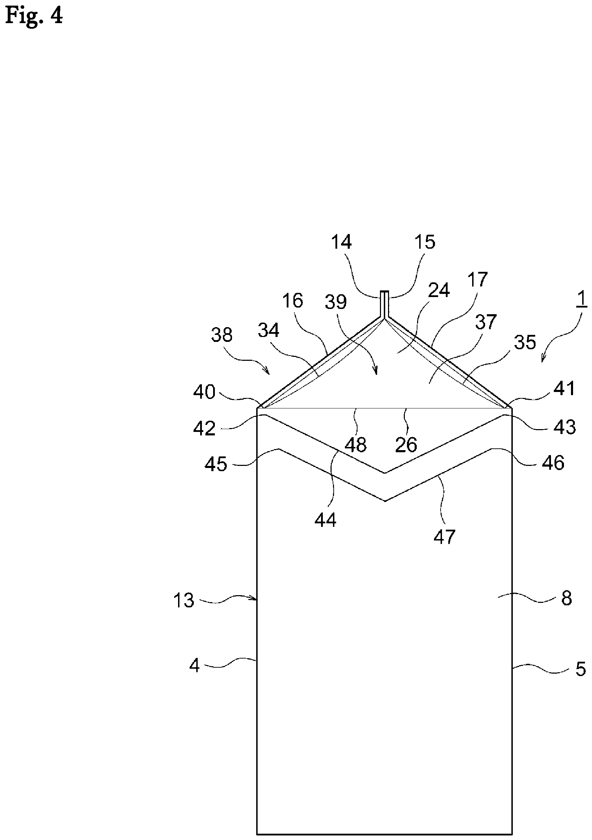

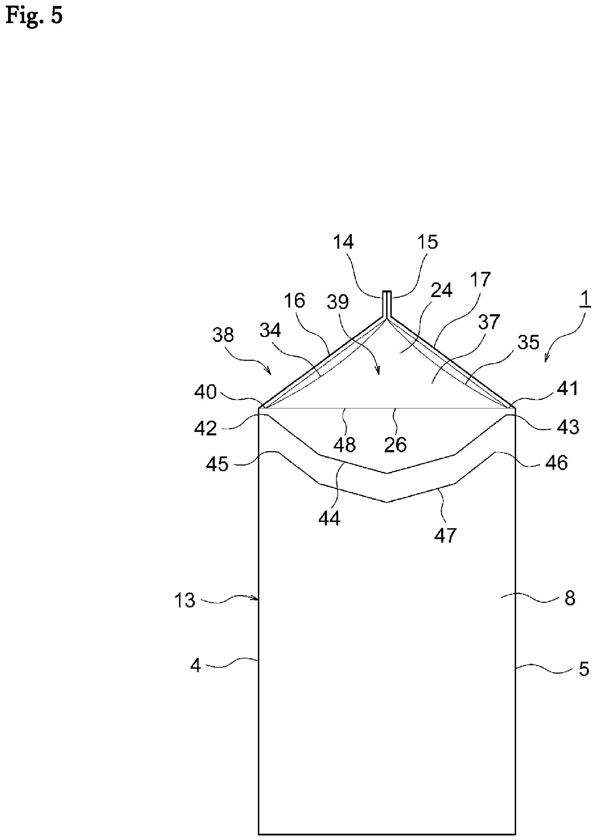

FIG. 1 to FIG. 5 are illustrations of an example of a paper container according to an embodiment of the present invention. FIG. 1 is a side view for illustrating an unsealed side of this example of the paper container. FIG. 2 is a plan view for illustrating a carton blank for the paper container illustrated in FIG. 1. FIG. 3 is an explanatory enlarged view for illustrating a part of FIG. 2. FIG. 4 and FIG. 5 are each an explanatory view for illustrating another example of a first auxiliary folding line and a second auxiliary folding line of the paper container illustrated in FIG. 1.

A gable roof-type paper container 1 in this example is formed of a carton blank 2 that is a paperboard material illustrated in FIG. 2 having a thermoplastic resin laminated on each of a front surface and a back surface thereof. The carton blank includes four body panels 6, 7, 8, and 9 contiguous with each other through body vertical folding lines 3, 4, and 5. At the time of forming the gable roof-type paper container 1, a vertical direction sealing panel 11 contiguous with the body panel 9 through a body vertical folding line 10 is joined to an edge portion 12 of the body panel 6 so that the four body panels 6, 7, 8, and 9 form a quadrangular tubular body 13 of the paper container.

A pair of gable roof forming panels 16 and 17 are contiguous with an upper end of the body panel 7 and an upper end of the body panel 9 through top portion horizontal folding lines 18 and 19. The pair of gable roof forming panels 16 and 17 include outer-side top sealing panels 14 and 15 at upper portions thereof, respectively, and are opposed to each other. Further, a pair of gable wall forming panels 23 and 24 are contiguous with an upper end of the body panel 6 and an upper end of the body panel 8 through top portion horizontal folding lines 25 and 26. The pair of gable wall forming panels 23 and 24 include inner-side top sealing panels 20 and 21 at upper portions thereof, respectively, and are opposed to each other. Any one of the pair of gable wall forming panels 23 and 24 is formed into a pouring spout 22 and unsealed. In this example, the gable wall forming panel 24 serves as an unsealed-side gable wall forming panel.

Guide folding lines 27 and 28 are formed on portions of the gable roof forming panels 16 and 17 on the unsealed-side gable wall forming panel 24 side, respectively. Along the guide folding lines 27 and 28, folding of the gable roof forming panels 16 and 17 is guided at the time of unsealing. Further, a pouring spout 31 for a straw is formed in the gable roof forming panel 16. The pouring spout 31 for a straw includes a first half-cut portion 29 formed on a back surface side of the gable roof forming panel 16 so as to serve as a straw slot, and a second half-cut portion 30 formed on a front surface side of the gable roof forming panel 16 so as to surround the first half-cut portion 29.

Tuck-in folding lines 32, 33, 34, and 35 are formed on the gable wall forming panels 23 and 24, and the gable wall forming panels 23 and 24 are folded in along the tuck-in folding lines 32, 33, 34, and 35. Further, the gable wall forming panel 23 includes a substantially triangular surface portion 36 surrounded by the tuck-in folding lines 32 and 33 and the top portion horizontal folding line 25, and the gable wall forming panel 24 includes a substantially triangular surface portion 37 surrounded by the tuck-in folding lines 34 and 35 and the top portion horizontal folding line 26.

At the time of forming the paper container 1, the pair of gable wall forming panels 23 and 24 are folded between the pair of gable roof forming panels 16 and 17, and the outer-side top sealing panels 14 and 15 and the inner-side top sealing panels 20 and 21 are heated, sealed, and tightly closed at predetermined positions, thereby forming a gable roof-shaped top portion 38 as illustrated in FIG. 1. In the gable roof-shaped top portion 38 thus formed, a space 39 is defined to have an opening between the pair of gable roof forming panels 16 and 17, the unsealed-side body panel 8, and the unsealed-side gable wall forming panel 24. The space 39 allows fingers to be inserted thereinto in order that the fingers are put on the unsealed-side gable wall forming panel 24 at the time of unsealing of the gable roof-type paper container 1. The substantially triangular surface portion 37 formed on the gable wall forming panel 24 is located on a deep plane of the space 39.

Further, on the unsealed-side body panel 8, which is contiguous with the unsealed-side gable wall forming panel 24 through the top portion horizontal folding line 26, a first auxiliary folding line 44 having a downwardly curved shape is formed to have: a left end portion 42 arranged at or near an intersection 40 of an end portion of the body vertical folding line 4 on the left of the body panel 8 and a left end portion of the top portion horizontal folding line 26; a right end portion 43 arranged at or near an intersection 41 of an end portion of the body vertical folding line 5 on the right of the body panel 8 and a right end portion of the top portion horizontal folding line 26; and a lowest point U1 located at a center of the body panel 8 in a right-and-left direction thereof.

In this example, the end portions 42 and 43 of the first auxiliary folding line 44 are arranged near the intersection 40 of the end portion of the body vertical folding line 4 and the end portion of the top portion horizontal folding line 26 and the intersection 41 of the end portion of the body vertical folding line 5 and the end portion of the top portion horizontal folding line 26, respectively. However, the end portions 42 and 43 of the first auxiliary folding line 44 may be connected to the intersections 40 and 41, respectively.

In addition, on the body panel 8, below the first auxiliary folding line 44 and at a predetermined distance from the first auxiliary folding line 44, a second auxiliary folding line 47 having a downwardly curved shape is formed to have: a left end portion 45 arranged at or near the intersection 40 of the end portion of the body vertical folding line 4 on the left of the body panel 8 and the left end portion of the top portion horizontal folding line 26; a right end portion 46 arranged at or near the intersection 41 of the end portion of the body vertical folding line 5 on the right of the body panel 8 and the right end portion of the top portion horizontal folding line 26; and a lowest point U2 located at the center of the body panel 8 in the right-and-left direction.

In this example, the end portions 45 and 46 of the second auxiliary folding line 47 are arranged near the intersection 40 of the end portion of the body vertical folding line 4 and the end portion of the top portion horizontal folding line 26 and the intersection 41 of the end portion of the body vertical folding line 5 and the end portion of the top portion horizontal folding line 26, respectively, and located away from the end portions 45 and 46 of the first auxiliary folding line 44, respectively. However, the end portions 45 and 46 of the second auxiliary folding line 47 may be connected to the intersections 40 and 41, respectively.

Further, a length L1 of an interval between the lowest point U1 of the first auxiliary folding line 44 and the lowest point U2 of the second auxiliary folding line 47 is 30% to 50% of a length L2 of an interval between a center of the top portion horizontal folding line 26 and the lowest point U1 of the first auxiliary folding line 44.

The above-mentioned downwardly curved shapes of the first auxiliary folding line 44 having a downwardly curved shape and the second auxiliary folding line 47 having a downwardly curved shape may be an arc shape or an angled curve shape. In this example, each of the first auxiliary folding line 44 and the second auxiliary folding line 47 is formed into an arc shape, but may be, for example, an inverted V-shaped line having an angled curve shape as illustrated in FIG. 4. Alternatively, each of the first auxiliary folding line 44 and the second auxiliary folding line 47 may be a polygonal line having an angled curve shape as illustrated in FIG. 5.

According to the paper container configured as described above, two auxiliary folding lines, that is, the first auxiliary folding line 44 and the second auxiliary folding line 47 are formed on the unsealed-side body panel 8. Thus, when a force is applied to fold the body panel 8, the first auxiliary folding line 44 and the second auxiliary folding line 47 effectively guide folding of the body panel 8 as compared to a single auxiliary folding line.

Therefore, at the time of unsealing, when a top-portion corner portion 48 of the body 13 formed at the upper end portion of the body panel 8 is pushed in toward an inner side of the paper container 1, a force of pushing in the top-portion corner portion 49 of the body 13 is applied to fold the paper container along the first auxiliary folding line 44 and the second auxiliary folding line 47 formed on the body panel 8. Accordingly, the body panel 8 is mountain-folded along the first auxiliary folding line 44 and the second auxiliary folding line 47 with a relatively small force, and thus the top-portion corner portion 48 can be pushed in and dented with a relatively small force.

If the top-portion corner portion 48 is pushed in with an excessively large force, the body panel 8 is first mountain-folded and dented along the first auxiliary folding line 44 and then mountain-folded and dented along the second auxiliary folding line 47, and thus the body panel 8 is prevented from being dented beyond the second auxiliary folding line 47, thereby being capable of preventing distortion of the body 13.

Further, in this example, the length L1 of the interval between the lowest point U1 of the first auxiliary folding line 44 and the lowest point U2 of the second auxiliary folding line 47 is 30% to 50% of the length L2 of the interval between the center of the top portion horizontal folding line 26 and the lowest point U2 of the first auxiliary folding line 44. Accordingly, when a force is applied to fold the body panel 8, the first auxiliary folding line 44 and the second auxiliary folding line 47 guide folding of the body panel 8 more effectively.

Further, when the top-portion corner portion 48 is pushed in with an excessively large force, the body panel 8 is reliably mountain-folded and dented along the first auxiliary folding line 44 and then reliably mountain-folded and dented along the second auxiliary folding line 47, and thus the body panel 8 is more effectively prevented from being dented beyond the second auxiliary folding line 47, thereby being capable of preventing distortion of the body 13 more effectively.

### Reference Signs List

1 paper container
2 carton blank
3, 4, 5 body vertical folding line
6, 7, 8, 9 body panel
10 body vertical folding line
11 vertical direction sealing panel
12 edge portion
13 body
14, 15 outer-side top sealing panel
16, 17 gable roof forming panel
18, 19 top portion horizontal folding line
20, 21 inner-side top sealing panel
22 pouring spout
23, 24 gable wall forming panel
25, 26 top portion horizontal folding line
27, 28 guide folding line
29 first half-cut portion
30 second half-cut portion
31 pouring spout for straw
32, 33, 34, 35 tuck-in folding line
36, 37 substantially triangular surface portion
38 top portion
39 space
40, 41 intersection
42, 43 end portion of first auxiliary folding line
44 first auxiliary folding line
45, 46 end portion of second auxiliary folding line
47 second auxiliary folding line
48 top-portion corner portion
U1 lowest point of first auxiliary folding line
U2 lowest point of second auxiliary folding line
L1 length of interval between lowest point of first auxiliary folding line and lowest point of second auxiliary folding line
L2 length of interval between center of top portion horizontal folding line and lowest point of first auxiliary folding line

## Claims

1. A paper container, which is a gable roof type and is formed of a paperboard material having a thermoplastic resin laminated on each of a front surface and a back surface of the paperboard material, the paper container comprising:
four body panels;
a vertical direction sealing panel, which joins edge portions of the four body panels so that the four body panels form a quadrangular body;
a pair of gable roof forming panels, which are contiguous with upper ends of the body panels, and include outer-side top sealing panels at upper portions of the pair of gable roof forming panels, respectively, and are opposed to each other;
a pair of gable wall forming panels, which are contiguous with upper ends of the body panels through top portion horizontal folding lines, and include inner-side top sealing panels at upper portions of the pair of gable wall forming panels, respectively, and are opposed to each other, any one of the pair of gable wall forming panels being formed into a pouring spout to be unsealed; and
a top portion formed by folding the pair of gable wall forming panels between the pair of gable roof forming panels, and by heating, sealing, and tightly closing the outer-side top sealing panels and the inner-side top sealing panels at predetermined positions,
wherein on an unsealed-side body panel among the four body panels, which is contiguous with the unsealed-side gable wall forming panel through a top portion horizontal folding line, a first auxiliary folding line having a downwardly curved shape is formed to have: a left end portion arranged at or near an intersection of an end portion of a body vertical folding line on the left of the unsealed-side body panel and a left end portion of the top portion horizontal folding line; a right end portion arranged at or near an intersection of an end portion of a body vertical folding line on the right of the unsealed-side body panel and a right end portion of the top portion horizontal folding line; and a lowest point located at a center of the body panel in a right-and-left direction of the body panel, and below the first auxiliary folding line and at a predetermined distance from the first auxiliary folding line, a second auxiliary folding line having a downwardly curved shape is formed to have: a left end portion arranged at or near the intersection of the end portion of the body vertical folding line on the left of the body panel and the left end portion of the top portion horizontal folding line; a right end portion arranged at or near the intersection of the end portion of the body vertical folding line on the right of the body panel and the right end portion of the top portion horizontal folding line; and a lowest point located at the center of the body panel in the right-and-left direction.

2. The paper container according to claim 1, wherein a length of an interval between the lowest point of the first auxiliary folding line and the lowest point of the second auxiliary folding line is 30% to 50% of a length of an interval between a center of the top portion horizontal folding line and the lowest point of the first auxiliary folding line.
